# EUROPÄISCHE PATENTSCHRIFT

(11) **EP 3 407 043 B1**
(45) Veröffentlichungstag und Bekanntmachung des Hinweises auf die Patenterteilung: **10.03.2021**
(21) Anmeldenummer: 18172156.4
(22) Anmeldetag: 14.05.2018
(51) Int. Cl.: G01L 1/22

(54) **REDUNDANTE KRAFTMESSACHSE MIT RÄUMLICH GETRENNTEN MESSANORDNUNGEN**
REDUNDANT FORCE MEASURING AXLE WITH SPATIALLY SEPARATED MEASURING ARRANGEMENTS
AXE DE MESURE DE FORCE REDONDANTE AVEC AGENCEMENTS DE MESURE SPATIALEMENT SÉPARÉS

(30) Priorität: 22.05.2017 DE 102017111097
(43) Veröffentlichungstag der Anmeldung: 28.11.2018
(73) Patentinhaber: Brosa AG, 88069 Tettnang (DE)
(72) Erfinder: Welzel, Christian, 9464 Rüthi (CH); Schell, Sebastian, 88214 Ravensburg (DE); Igel, Raimund, 88069 Tettnang (DE)
(74) Vertreter: Witte, Weller & Partner Patentanwälte mbB

(56) Entgegenhaltungen:
- WO-A1-2004/063690
- GB-A- 2 129 949

## Beschreibung

Die vorliegende Erfindung betrifft eine Kraftmessachse, bzw. ein Kraftaufnehmersystem mit einer derartigen Kraftmessachse, zum Einsatz in einer maritimen Umgebung, wobei die Kraftmessachse redundant ausgelegt ist, um selbst unter extremen (maritimen) Bedingungen zuverlässig zu arbeiten und eine lange Lebensdauer aufzuweisen. Die Kraftmessachse ist ein spezieller Typ eines allgemeinen Kraftaufnehmers.

Herkömmliche Kraftaufnehmer weisen einen Messkörper auf, der vorzugsweise aus Stahl hergestellt ist und der an einer oder mehreren Stellen hinsichtlich seiner Materialstärke geschwächt ist, um dort membranartige, dünnere (Mess-)Zonen auszubilden, wo eine Messzelle bzw. ein Sensor angeordnet werden kann, um durch mechanische Verformung hervorgerufene Dehnungen und/oder Stauchungen der Zone zu messen, aus denen auf eine die Verformung verursachende Kraft zurückgeschlossen werden kann.

Je nach Anwendung werden entweder sogenannte Messachsen (siehe z.B. DE 103 02 349 B3, DE 103 02 352 A1, WO 2008/110360 A1 oder DE 102 45 768 A1) oder Messhülsen (wie z.B. EP 2 538 189 A1) eingesetzt. Die herkömmlichen Messachsen und Messhülsen weisen in der Regel einen zylindrischen Körper auf. Die Messhülsen sind Zylinder, die innen hohl sind und in welche herstellerseitig oder kundenseitig bereitgestellte (Maschinen-)Achsen, vorzugsweise formschlüssig, einführbar sind. Die Messachsen sind ein- oder mehrteilige (Voll-)Zylinder, die in kundenseitig vorgegebene Bauräume (Maschinengestell, z.B. Rollenkopf eines Krans) eingeführt werden. Ein klassisches Anwendungsbeispiel ist in der Messung von Kräften zu sehen, die z.B. auf Seilrollen wirken, wie sie z.B. bei Aufzügen oder Kränen eingesetzt werden.

GB 2 129 949 A offenbart eine zylindirsche Vorrichtung zum Messen von Scherkräften.

WO 2004/063690 A1 offenbart einen Kraftaufnehmer zum Messen von Achskräften.

Messachsen werden häufig in maritimen (lateinisch *maritimus* "zum Meer gehörig") Umgebungen eingesetzt. Eine maritime Umgebung ist eine durch den Einfluss des Meeres geprägte Umgebung. Die Messachsen werden häufig am Meer (z.B. in Werften oder Häfen) oder auf dem Meer (z.B. auf Schiffen, Bohrinseln zur Erdöl- und Erdgasgewinnung, etc.) eingesetzt. In der maritimen Umgebung besteht die Gefahr, dass (Meer-)Wasser in sensitive Messbereiche der Kraftmessachsen (z.B. durch Korrosion, unbeabsichtigtes Unterwassertauchen, extreme Wetterbedingungen, etc.) eintritt. Als sensitive Bereiche werden insbesondere die kammerartig ausgebildeten Bereiche angesehen, wo die (elektrisch betriebenen) Sensoren vorgesehen sind.

Um negative Auswirkungen der maritimen Umgebung abzuschwächen, werden herkömmliche Kraftmessachsen dauerhaft abgedichtet. Um das Risiko eines Ausfalls (weiter) zu minimieren, werden redundante Sensorsysteme eingesetzt, indem die Sensoren mehrfach vorgesehen werden. Das redundante Vorsehen der Sensoren verhindert einen Totalausfall aber nicht, wenn der räumliche Bereich (Kammer), wo die redundanten Sensoren vorgesehen sind, eine Leckage bekommt, weil dann regelmäßig alle Sensoren von der Leckage betroffen sind. Eine Maßnahme zur Vermeidung eines derartigen Fehlers ("common cause failure") ist in einem Einsatz von Dichtungsgel zu sehen. In diesem Fall werden innenliegende Hohlräume, die gegenüber einer Außenwelt abgedichtet sind, möglichst vollständig, d.h. ohne Lufteinschlüsse, vor einer endgültigen Versiegelung gegenüber der Außenwelt mit dem Dichtungsgel befüllt. Ein derartiges Dichtungsgel ist z.B. durch das Produkt "SilGel" (eingetragene Marke der Firma Wacker) repräsentiert.

"SilGel" ist ein Dichtungsgel auf Silikonbasis. Dichtungsgele auf Silikonbasis haben den Nachteil, dass sie nicht gut auf glatten Oberflächen aus Edelstahl haften, aus dem die Kraftaufnehmerachsen üblicherweise hergestellt sind. Ferner ziehen sich Gele auf Silikonbasis beim Aushärten, d.h. während ihres Lebenszyklus, zusammen, so dass sich über die Zeit doch ungewünschte Hohlräume bilden. Dichtungsgele auf einer Silikonbasis dichten also langfristig gesehen nicht zuverlässig. Dies birgt die Gefahr, dass die (redundanten) Sensoren trotz Verwendung eines Dichtungsgels im Falle einer Leckage aufgrund eintretender Feuchtigkeit oder aufgrund von eintretendem (Meer-)Wasser ausfallen, so dass es zu einem Komplettausfall der gesamten Kraftmessachse kommt.

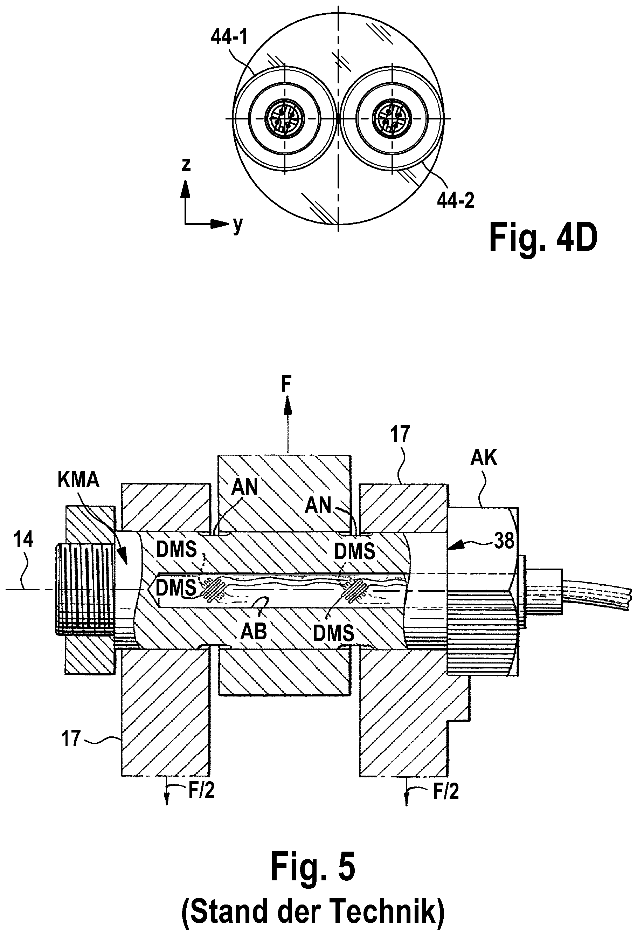

Fig. 5 zeigt eine teilweise geschnitten dargestellte, herkömmliche Kraftmessachse KMA aus dem Dokument US 3,695,096 A in einem eingebauten Zustand. Ein Körper dieser Kraftmessachse (KMA) weist eine zentrale Axialbohrung (AB) auf, die sich koaxial zu einer Mittel- bzw. Längsachse des Körpers von einer Stirnseite des Körpers axial in den Körper hinein erstreckt. An einer Innenwandung der Axialbohrung sind ein oder mehrere Sensoren (DMS) in axialen Abschnitten des Körpers angebracht, die radial in Form von umfänglich umlaufenden Außennuten (AN) geschwächt sind. In der Fig. 5 sind die Sensoren durch Dehnungsmessstreifen (DMS) implementiert, die im Bereich der Außennuten an die Innenwandung der Axialbohrung geklebt sind. Messtechnisch sind die DMS zu Vollbrücken verschaltet. Ein durch die Axialbohrung definierter, innerer Hohlraum des Körpers der Kraftmessachse wird in einer maritimen Umgebung mit dem oben erwähnten Dichtungsgel gefüllt und anschließend durch eine Anschlusskappe (AK) am stirnseitigen Ende des Körpers (dicht) verschlossen.

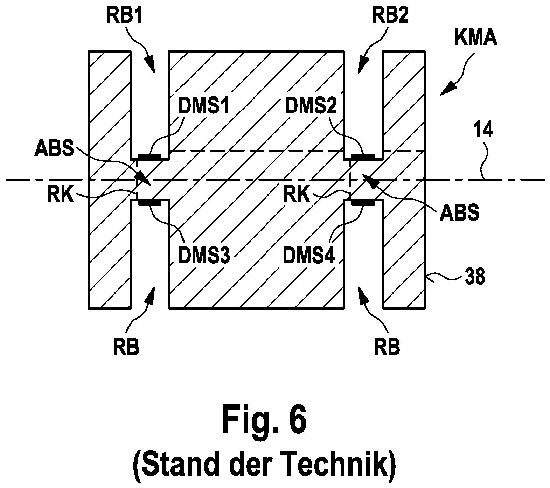

Ferner sind Kraftmessachsen bekannt, die - anstatt der einen zentralen Axialbohrung der Fig. 5 - zur Aufnahme der Sensoren in einem messempfindlichen Bereich des Körpers eine oder mehrere Radialbohrungen (RB) aufweist, wie es in der Schnittdarstellung der Fig. 6 exemplarisch gezeigt ist. Die Fig. 6 zeigt wiederum eine herkömmliche Kraftmessachse (KMA) mit exemplarisch vier Radialbohrungen (RB), die radial nach außen offen sind. Die Radialbohrungen erstrecken sich jeweils radial von außen in den zylindrischen Messkörper hinein und sind zur Längsachse des Körpers hin ausgerichtet. Jeweils zwei der Radialbohrungen sind axial zueinander beabstandet angeordnet und auf einer identischen Umfangshöhe positioniert, um jeweils ein Radialbohrungspaar (z.B. RB1 und RB2) zu bilden. Die Radialbohrungspaare liegen sich radial diametral gegenüber und definieren stegartige Abschnitte (ABS) des Körpers zwischen sich, wo die Sensoren appliziert werden. Die stegartigen Abschnitte des Körpers weisen radial orientierte Kanäle (RK) auf, um radial benachbart angeordnete Sensoren (DMS1 und DMS3 bzw. DMS2 und DMS4) elektrische miteinander zu verbinden. Zwei der axial benachbarten Sensoren (DMS1 und DMS2) sind über einen axial orientierten Kanal (vgl. Strichlinie in Fig. 6) miteinander verbunden. Zumindest einer der Sensoren (DMS2) ist über einen weiteren axial orientierten Kanal mit einer der Stirnseiten verbunden. Diese Kanäle dienen zur Aufnahme von elektrischen Leitungen, über die alle Sensoren elektrisch miteinander verbunden werden. Auf diese Weise können alle Sensoren zu einer Vollbrücke miteinander verbunden werden. Der Körper definiert in diesem Fall eine einzige Messanordnung, die mit vier Sensoren versehen ist, die wiederum ein Sensorsystem definieren.

Kraftmessachsen mit Radialbohrungen, die gemäß der Fig. 6 eingerichtet sind, eignen sich nicht zum Einsatz in einer maritimen Umgebung, weil sie offen sind. Selbst wenn man sie mit Deckeln verschließen und sie mit dem Dichtungsgel befüllen würde, wären sie nicht geeignet. Die Verbindungskanäle haben geringe Durchmesser, die eine gleichmäßige Verteilung des Dichtungsgels verhindern. Es würden sich Lufteinschlüsse bilden. Sobald an einer Stelle Wasser eindringt, wären alle Sensoren betroffen.

Es ist daher eine Aufgabe der vorliegenden Erfindung eine Kraftmessachse vorzusehen, die die oben genannten Nachteile überwindet.

Diese Aufgabe wird gelöst durch eine Kraftmessachse nach Anspruch 1.

Auf diese Weise wird ein redundantes System vorgesehen, das zum einen ein getrenntes "Raumsystem" (d.h. mehrere voneinander räumlich getrennte Messanordnungen) umfasst und zum andern ein getrennte "Messsysteme" (d.h. Messanordnung inkl. Sensoren) im gleichen Messkörper der Kraftmessachse ermöglicht. Fällt eines der Messsysteme aus, so kann das andere noch immer benutzt werden, ohne dass die gesamte Kraftmessachse ausfällt. Somit wird Redundanz geschaffen.

Es kann ferner frei gewählt werden, welche der Radialbohrungen über einen entsprechenden Verbindungskanal miteinander verbunden werden, um eine jeweiliges Raumsystem im Körper zu definieren. Dies bedeutet, dass je nach Einbaulage, andere Radialbohrungen (nach der Wahl des Herstellers) miteinander verbunden werden können, um die jeweilige Messanordnung zu definieren.

Weder die Kanäle für die Verbindungsleitungen zwischen den Sensoren, noch die Kanäle für die Anschlussleitungen zwischen den Sensoren und einer Außenwelt stellen eine physische Verbindung zwischen den individuellen Messanordnungen bzw. den Messsystemen her.

Die Radialbohrungen und die Kanäle im Inneren der Kraftmessachse müssen auch nicht mit einem Dichtungsgel gefüllt werden, was eine wesentliche Verbesserung und Vereinfachung im Herstellungsprozess darstellt.

Vorzugsweise weist der zylindrische Messkörper zwei sich axial gegenüberliegende, insbesondere kreisförmige, Stirnflächen auf und jede der Messanordnungen umfasst ferner einen separaten Anschlusskanal, der sich von einer der Radialbohrungen von jeder der Messanordnungen, vorzugsweise axial, nach außen zu einer der Stirnflächen des Messkörpers erstreckt.

Das oben erwähnte Raumsystem ist also um den Verbindungskanal erweitert.

Bei einer besonderen Ausgestaltung stellt jeder der Anschlusskanäle einen Hohlraum in einem axialen Endabschnitt des Messkörpers dar, wobei der Hohlraum eingerichtet ist, ein Anschlussglied, insbesondere hermetisch, dicht aufzunehmen und wobei das Anschlussglied eine Steckerkappe und vorzugsweise eine elektronische Auswertungseinheit aufweist.

Durch die Integration der Auswertungseinheit in die Steckerkappe, und damit in das Innere der Kraftmessachse selbst, baut die Kraftmessachse sehr kompakt. Das Anschlussglied ist eingerichtet, die jeweilige Messanordnung gegenüber der Außenwelt abzudichten. Weil das Anschlussglied eine Steckerkappe ist, können Messsignale auf einfache Weise mit der Außenwelt ausgetauscht werden, indem ein Stecker in die Kraftmessachse eingesteckt wird.

Ferner ist es von Vorteil, wenn die, insbesondere entfernbaren, Anschlussglieder, mit denen die Anschlusskanäle von axial außen dicht verschlossen werden, und die, insbesondere entfernbaren, Deckel, mit denen die Radialbohrungen von radial außen dicht verschlossen sind, von der Kraftmessachse umfasst sind.

Die Kraftmessachse wird dann als fertiges Endprodukt verkauft. Die Dichtigkeit der Kraftmessachse kann herstellerseitig gewährleistet und überprüft werden. Die Zuverlässigkeit erhöht sich, weil die Hersteller das fertige Produkt liefern.

Vorzugsweise schließen die Radialbohrungen, der Verbindungskanal und der Anschlusskanal von jeder der Messanordnungen zusammen mit den entsprechenden Deckeln und dem Anschlussglied jeweils einen, insbesondere hermetisch, abgedichteten Hohlraum ein, der, vorzugsweise ausschließlich, mit einem Gas, wie z.B. Luft, gefüllt ist.

Der Verzicht auf ein Dichtungsgel vereinfacht den Zusammenbau der Kraftmessachse bei gleichbleibender Zuverlässigkeit.

Auf ein Dichtungsgel kann vollständig verzichtet werden. Ein Wassereintritt von außen in das Innere der Messachse wird verhindert. Der Herstellungsvorgang ist einfach.

Erfindungsgemäß umfasst die Kraftmessachse ferner die Sensoren, die an den Böden der Radialbohrungen fixiert sind, wobei die Sensoren von jeder der Messanordnungen elektrisch über eine Verbindungsleitung, die sich durch den entsprechenden Verbindungskanal erstreckt, miteinander verbunden sind und, optional, über eine Anschlussleitung, die sich durch den Anschlusskanal erstreckt, an das jeweilige Anschlussglied gekoppelt sind.

Diese Sensoren sind also direkt miteinander verbunden, wobei zumindest einer der Sensoren über den anderen Sensor an die Außenwelt gekoppelt ist. Dies bedeutet mit anderen Worten, dass der mindestens eine der Sensoren indirekt mit der Außenwelt verbunden ist.

Vorzugsweise liegen sich jeweils zwei der umfänglich beabstandeten Radialbohrungen von jedem der Verformungsabschnitte radial direkt gegenüber, um einen stegartigen Abschnitt dazwischen auszubilden. Bezogen auf den Umfang liegen sich die entsprechenden Radialbohrungen also um 180 Grad versetzt gegenüber.

Der stegartige Abschnitt lässt sich aufgrund der geringen Materialstärke im Vergleich zu den restlichen Abschnitten des Körpers leichter verformen, so dass Messsignale leichter erzeugt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Schnittansicht einer ersten Ausführungsform einer Kraftmessachse gemäß der Erfindung;
- Fig. 2: die Schnittansicht (Fig. 2A) der Fig. 1 in verkleinerter Darstellung, eine Seitenansicht (Fig. 2B) der Kraftmessachse der Fig. 2A und eine Vorderansicht (Fig. 2C) der Kraftmessachse der Fig. 2A;
- Fig. 3: eine Schnittansicht (Fig. 3A) einer zweiten Ausführungsform der Kraftmessachse und eine Seitenansicht (Fig. 3B) der Kraftmessachse der Fig. 3A;
- Fig. 4: eine Seitenansicht (Fig. 4A) einer dritten Ausführungsform der Kraftmessachse; eine Schnittansicht (Fig. 4B) entlang der Linie IV-B - IV-B der Fig. 4A; eine Schnittansicht (Fig. 4C) entlang einer Linie IV-C - IV-C der Fig. 4A und eine Vorderansicht (Fig. 4D) der Kraftmessachse der Fig. 4A;
- Fig. 5: eine teilweise geschnitten dargestellte, herkömmliche Kraftmessachse; und
- Fig. 6: eine Schnittansicht einer weiteren, herkömmlichen Kraftmessachse.

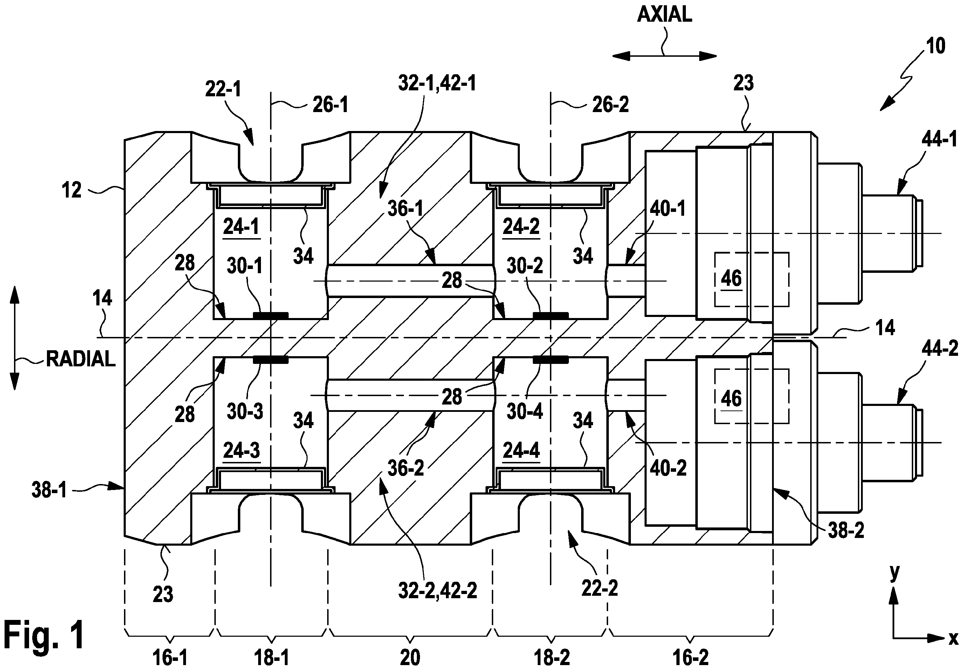

Fig. 1 zeigt eine Schnittansicht einer Kraftmessachse 10, die einen (Mess-)Körper 12 aufweist, der zum Messen von Scherkräften eingerichtet ist. Der Schnitt der Fig. 1 verläuft durch eine Ebene, die die Mittelachse des Körpers 12 umfasst. Der Körper 12 ist im Wesentlichen zylindrisch ausgebildet, indem er aus einem Zylinder aus Vollmaterial z.B. spanend (Fräsen, Bohren, etc.) hergestellt wird. Der Körper 12 erstreckt sich entlang seiner Längsachse 14, die koaxial zur Mittelachse angeordnet ist.

Nachfolgend wird der Körper 12 der Fig. 1 axial von links nach rechts betrachtet. Der Körper 12 weist einen ersten Lagerabschnitt 16-1, einen ersten Verformungsabschnitt 18-1, einen Krafteinleitungsabschnitt 20, einen zweiten Verformungsabschnitt 18-2 und einen zweiten Lagerabschnitt 16-2 auf, die in axialer Richtung miteinander verbunden sind. Die Lagerabschnitte 16 und der Krafteinleitungsabschnitt 20 weisen im Wesentlichen einen identischen (Außen-) Radius auf. Die Verformungsabschnitte 18-1 und 18-2 weisen jeweils eine Außennut 22-1 bzw. 22-2 auf. Die Außennuten 22 stellen radial orientierte Einschnitte in eine Mantelfläche 23 des Körpers 12 dar. Insofern stellt der Körper 12 keinen idealen Zylinder dar, sondern ist lediglich "im Wesentlichen zylindrisch" ausgebildet.

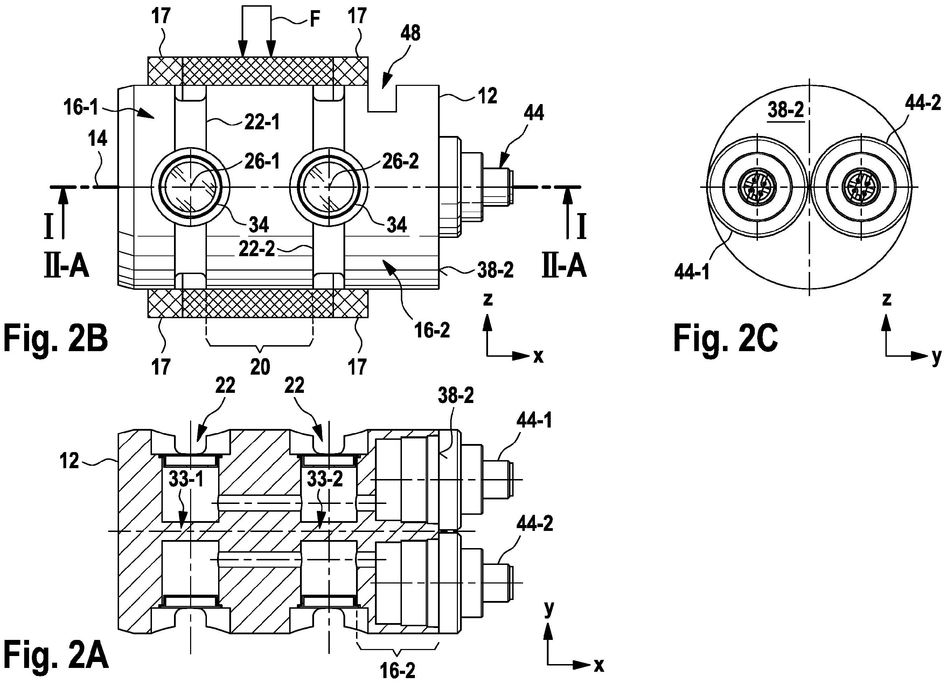

Ferner kann der erste Lagerabschnitt 16-1 axial außen konisch verjüngt ausgebildet sein, wie es in Fig. 1 gezeigt ist. Diese konische Verjüngung vereinfacht eine Einführung des Körpers 12 in ein extern bereitgestelltes Maschinengestell 17 (vergleiche Fig. 2B) sowie in eine z.B. nicht näher bezeichnete Seilrolle (vergleiche Element axial zwischen den Maschinengestellen 17 in Fig. 2B). Die Lagerabschnitte 16-1 und 16-2 dienen zum Abstützen des Messkörpers 12 in oder an dem externen Maschinengestell 17. Der Krafteinleitungsabschnitt 20 dient zum Einleiten einer Kraft F (vergleiche 2B) von radial außen in den Messkörper 12. Die Kraft F wirkt im Idealfall senkrecht zur Längsachse 14 und senkrecht zu den Mittelachsen 26 der Radialbohrungen 24 (Vorzugsmessrichtung). Die Kraft F kann aber auch - abweichend von ideal senkrecht - schräg von radial außen auf den Körper 12 einwirken (nicht gezeigt).

Der Krafteinleitungsabschnitt 20 ist axial zwischen den Verformungsabschnitten 18 angeordnet. Die Verformungsabschnitte 28 sind axial zwischen einem der Lagerabschnitte 16 und dem Krafteinleitungsabschnitt 20 angeordnet. Die Verformungsabschnitte 28 sind vorzugsweise identisch dimensioniert, insbesondere was die Außennuten 22 und die Radialbohrungen 24 betrifft, die nachfolgend noch näher erläutert werden. Die Lagerabschnitte 16 können unterschiedliche axiale Längen aufweisen.

Die Verformungsabschnitte 18 stellen axiale Abschnitte des Körpers 12 dar, deren Materialstärke, insbesondere in der radialen Richtung, gegenüber den anderen Abschnitten 16 und 20 geschwächt ist, um eine Verformung messen zu können, die durch die Kraft F im Körper 12 hervorgerufen wird.

Die Verformungsabschnitte 18-1 und 18-2 weisen mehrere Radialbohrungen 24 auf. In der Fig. 1 sind exemplarisch vier Radialbohrungen 24-1 bis 24-4 gezeigt. Es können mehr Radialbohrungen 24 vorgesehen werden, vorzugsweise paarweise.

Jeder der Radialbohrungen 24 erstreckt sich von radial außen nach radial innen und ist vorzugsweise auf die Zentral- bzw. Längsachse 14 des Körpers 12 ausgerichtet. Die Radialbohrungen 24 stellen insbesondere radial orientierte, kammerartige (zylindrische) Sacklöcher dar. Vorzugsweise liegen sich immer zwei Radialbohrungen 24 radial gegenüber. Diese Radialbohrungen 24 (hier 24-1 und 24-3 bzw. 24-2 und 24-4) sind koaxial zu ihren Mittelachsen 26 orientiert, die senkrecht auf der Längsachse 14 stehen und vorzugsweise Symmetrieachsen der Radialbohrungen 24 definieren. Böden der Sacklöcher bzw. Radialbohrungen 24 sind mit 28 bezeichnet. An den Böden 28 werden Sensoren 30 (z.B. Dehnungsmessstreifen, DMS) radial von außen am Körper 12 appliziert. Alternativ können z.B. gesputterte Zellen (nicht gezeigt) eingeschweißt werden.

Die erste Radialbohrung 24-1 und die zweite Radialbohrung 24-2 sind auf gleicher Umfangshöhe angeordnet und axial beabstandet voneinander angeordnet (vgl. Fig. 2B). Die Sensoren 30-1 und 30-2 der Fig. 1 definieren ein erstes Sensorsystem 32-1, das unabhängig (d.h. redundant) von einem zweiten Sensorsystem 32-2 arbeitet, welches durch die Sensoren 30-3 und 30-4 in den Radialbohrungen 24-3 und 24-4 gebildet wird. Die Radialbohrungen 24-3 und 24-4 sind ebenfalls axial zueinander beabstandet angeordnet und liegen den Radialbohrungen 24-1 und 24-2 diametral gegenüber, um stegartige Abschnitte 33-1 und 33-2 (vgl. Fig. 2A) des Körpers 12 radial zwischen sich zu definieren, die leichter verformbar sind als andere Bereiche des Körpers 12.

Die Radialbohrungen 24 sind jeweils durch einen, vorzugsweise formschlüssig ausgebildeten, Deckel 34 verschließbar. Die Deckel 34 können unlösbar oder lösbar mit dem Körper 12 verbunden werden. Die Deckel 34 können z.B. in den Körper 12 der Kraftmessachse 10 eingeschweißt werden. Alternativ können die Deckel 34 mit (hier nicht näher gezeigten und bezeichneten) Klemmringen oder O-Ringen, vorzugsweise hermetisch, dicht im Körper 12 fixiert werden.

Zwischen den Radialbohrungen 24-1 und 24-2 der Fig. 1 ist ein erster Verbindungskanal 36-1 innerhalb des Körpers 12 vorgesehen, der sich hier exemplarisch parallel zur Längsachse 14 erstreckt. Ein zweiter Verbindungskanal 36-2 ist entsprechend zwischen der dritten Radialbohrung 24-3 und der vierten Radialbohrung 24-4 vorgesehen. Die Verbindungskanäle 36 dienen zur Aufnahme von elektrischen Leitungen (hier nicht dargestellt) zwischen den entsprechenden Sensoren (hier 30-1 und 30-2 bzw. 30-3 und 30-4) des jeweiligen Sensorsystems 32. Die Verbindungskanäle 36 sind im Beispiel der Fig. 1 durch Axialbohrungen implementiert.

Die Radialbohrungen 24-1 und 24-2 definieren zusammen mit dem Verbindungskanal 36-1 und einem (optionalen) Anschlusskanal 40-1 eine erste Messanordnung 42-1 im Körper 12. Die Radialbohrungen 24-3 und 24-4 definieren zusammen mit dem Verbindungskanal 36-2 und einem (optionalen) Anschlusskanal 40-2 eine zweite Messanordnung 42-2 im Körper 12. Die Messanordnungen 42-1 und 42-2 sind räumlich voneinander getrennt und dienen jeweils der Aufnahme eines der Sensorsysteme 32-1 bzw. 32-2.

Die Anschlusskanäle 40-1 und 40-2 verbinden eine der Radialbohrungen 24 von jeder der Messanordnungen 42 mit einer der axial außen positionierten Stirnseiten 38 des Körpers 12. In der Fig. 1 verbindet der Anschlusskanal 40-1 die zweite Radialbohrung 24-2 mit der zweiten Stirnseite 38-2. Ferner verbindet der Anschlusskanal 40-2 die vierte Radialbohrung 24-4 mit der zweiten Stirnseite 38-2. Die Anschlusskanäle 40 dienen zur Aufnahme von elektrischen Leitungen (nicht gezeigt), um die im Inneren des Körpers 12 angeordneten Sensoren 30 mit einer Außenwelt zu verbinden oder an die Außenwelt zu koppeln.

Die Anschlusskanäle 40 sind in einem ersten axialen Bereich der zweiten Lagerabschnitts 16-2, der sich direkt an die Radialbohrungen 24 anschließt, in Form von Axialbohrungen vorgesehen, die sich parallel zur Längsachse 14 erstrecken. In einem sich daran anschließenden, zweiten axialen Bereich, der axial zwischen dem ersten axialen Abschnitt und der zweiten Stirnseite 38-2 angeordnet ist, können die Anschlusskanäle 40-1 und 40-2 jeweils dazu eingerichtet sein, ein Anschlussglied 44, vorzugsweise formschlüssig, aufzunehmen. In der Fig. 1 sind zwei Anschlussglieder 44-1 und 44-2 gezeigt, die insbesondere identisch ausgebildet sind. Die Anschlussglieder 44 stellen Steckerkappen dar, um die Sensorsysteme 32-1 und 32-2 elektrisch mit der Außenwelt zu verbinden. Die Anschlussglieder 44 werden, vorzugsweise hermetisch, dicht im Körper 12 fixiert. Die Anschlussglieder 44 können jeweils eine hier nicht näher gezeigte Auswertungs- und/oder Verstärkereinheit 46 aufnehmen und aufweisen.

Die erste Ausführungsform der Kraftmessachse 10 gemäß der Fig. 1 zeigt einen einzigen, einstückig ausgebildeten Messkörper 12, der zwei räumlich voneinander getrennte Messanordnungen 42-1 und 42-2 definiert, indem ein erstes Paar der Radialbohrungen 24 (24-1 und 24-2 bzw. 24-3 und 24-4) über einen Verbindungskanal 36 miteinander verbunden ist und über einen Anschlusskanal 40-1 und 40-2 an eine Außenwelt gekoppelt sind. Generell wird ein entsprechend geformter Messkörper 12 allein schon als Erfindung angesehen, ohne dass die Sensoren 30, deren Verkabelung (nicht gezeigt), die Deckel 34 und/oder die Anschlussglieder 44 vorgesehen sind.

Die Fig. 2 zeigt in ihrer Fig. 2A nochmals die Schnittansicht der Fig. 1 zwecks einer besseren (geometrischen) Zuordnung zur Seitenansicht der Fig. 2B und zur Vorderansicht der Fig. 2C. Die Fig. 2B zeigt den Körper 12 der Fig. 1 bzw. der Fig. 2A in einer Seitenansicht. Der Körper 12 der Fig. 2B ist axial in das (geschnitten dargestellte) Maschinengestell 17 eingeführt und zeigt exemplarisch einen normalen Einbauzustand. Auf dem Krafteinleitungsabschnitt 30 sitzt eine nicht näher bezeichnete, ebenfalls geschnitten dargestellte Seilrolle, deren (nicht dargestelltes) Seil die Kraft F verursacht. Die (exemplarische) Seilrolle überlappt den Krafteinleitungsabschnitt 30 axial und reicht somit axial in die Verformungsabschnitte 18 hinein. Das Maschinengestell 17 (z.B. einen Rollenkopf eines Krans) sitzt radial außen auf den Lagerabschnitten 16 und ragt axial ebenfalls in die jeweiligen Verformungsabschnitte 18 hinein bzw. überragt diese axial. Die Radialbohrungen 24 sind mit den Deckeln 34 verschlossen. Ein Durchmesser der Radialbohrungen 24 ist exemplarisch größer als eine Breite der Nuten 22 in der axialen Richtung (X-Richtung) gewählt. Es versteht sich, dass der Durchmesser der Radialbohrungen 24 größer oder kleiner gewählt werden kann. Ein größerer Durchmesser hat den Vorteil, dass die DMS 30 (vergleiche Fig. 1) leichter am Boden 28 der Radialbohrungen 24 appliziert werden können.

In der Fig. 2C ist die in den Fig. 2A und 2B axial rechts dargestellte Stirnseite 38-2 in einer Vorderansicht gezeigt, wenn man von rechts axial auf den Körper 12 blickt. Die Fig. 2C zeigt, dass die beiden Anschlussglieder 44-1 und 44-2 z.B. horizontal nebeneinander angeordnet sind.

Ferner ist in Fig. 2B eine Drehsicherung 48 in Form eines radial orientierten Einschnitts in den zweiten Lagerabschnitt 16-2 gezeigt, um den Körper 12 drehfest mit dem Maschinengestell 17 zu verbinden.

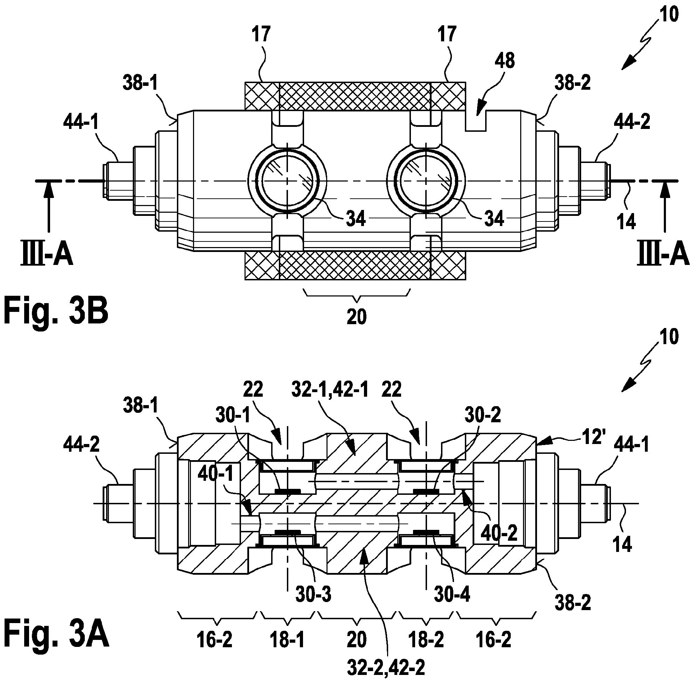

Die Fig. 3 zeigt eine zweite Ausführungsform der Kraftmessachse 10. Fig. 3A zeigt einen Schnitt entlang einer Linie III-A - III-A der Fig. 3B. Fig. 3B zeigt eine Seitenansicht ähnlich wie die Fig. 2B, wobei die Kraftmessachse 10 axial in das gleiche Maschinengestell 17 und die gleiche Seilrolle eingeführt ist, die wiederum geschnitten dargestellt sind.

Der Messkörper 12 der Fig. 3 ist im Wesentlichen identisch zum Messkörper 12 der Fig. 1 und 2 ausgebildet. Der Messkörper 12 der Fig. 3 unterscheidet sich dadurch, dass die Anschlusskanäle 40-1 und 40-2 auf axial gegenüberliegenden Seiten des Körpers 12 angeordnet sind, so dass die Anschlussglieder 44-1 und 44-2 auf axial gegenüberliegenden Seiten angeordnet sind. Dies bedeutet mit anderen Worten, dass die Anschlussglieder 44-1 und 44-2 auf der Seite der axial links gezeigten Stirnseite 38-1 bzw. auf der axial rechts gezeigten Seite der Stirnseite 38-2 angeordnet sind. Der Anschlusskanal 40-1 erstreckt sich zur linken Stirnseite 38-1. Ansonsten ist die Kraftmessachse 10 der Fig. 3 identisch zur Kraftmessachse 10 der Fig. 1 und 2 ausgebildet.

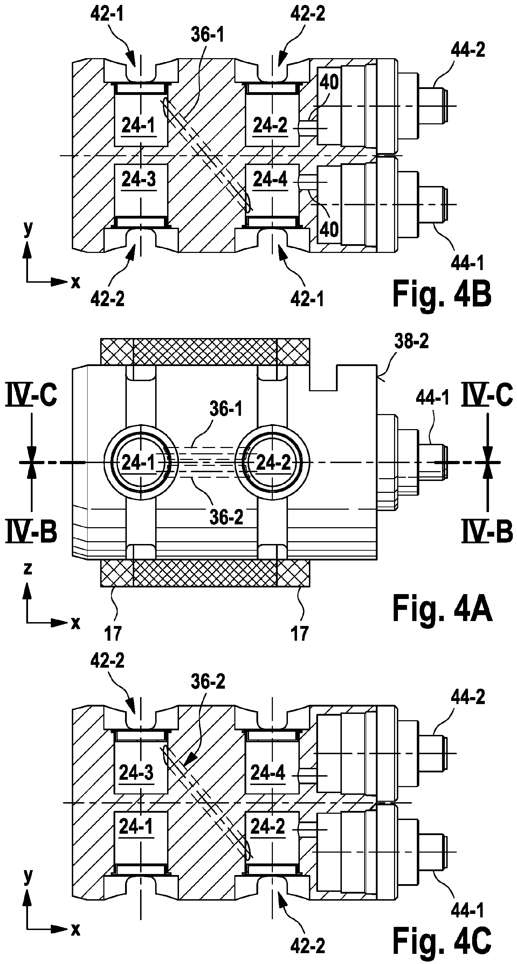

Fig. 4 zeigt eine weitere Ausführungsform der Kraftmessachse 10, die im Wesentlichen gleich wie die Kraftmessachsen 10 der Fig. 1 bis 3 ausgebildet ist. Die Kraftmessachse 10 der Fig. 4 unterscheidet sich von den anderen Kraftmessachsen 10 in der Ausrichtung der Verbindungskanäle 36-1 und 36-2 sowie in den Komponenten, die zu den jeweiligen Messanordnungen 42-1 und 42-2 gehören, wie es nachfolgend noch näher erläutert werden wird.

Fig. 4A zeigt eine Seitenansicht der Kraftmessachse 10 in einem eingebauten Zustand analog zu den Fig. 2B und 3B. Fig. 4B zeigt eine Schnittansicht durch den Körper 12 der Fig. 4A entlang der Linie IV-B - V-B der Fig. 4A. Fig. 4C zeigt eine Schnittansicht entlang der Linie IV-C - IV-C der Fig. 4A. Fig. 4D zeigt eine Vorderansicht der zweiten Stirnseite 38-2 des Körpers 12.

Im Körper 12 der Fig. 4 bilden die erste Radialbohrung 24-1 und die vierte Radialbohrung 24-4 zusammen mit dem Verbindungskanal 36-1 die erste Messanordnung 42-1. Die zweite Messanordnung 42-2 wird durch die zweite Radialbohrung 24-2 und die dritte Radialbohrung 24-3 gebildet, die über den zweiten Verbindungskanal 36-2 miteinander verbunden sind. Die Verbindungskanäle 36-1 und 36-2 verlaufen diagonal durch das Innere des Körpers 12, um die räumlich voneinander getrennten Messanordnungen 42-1 und 42-2 zu definieren. Die Verbindungskanäle 36-1 und 36-2 erstrecken sich parallel zur Schnittebene der Fig. 4A.

### Bezugszeichenliste

- 10: Kraftmessachse
- 12: (Mess-)Körper von 10
- 14: Längsachse
- 16: Lagerabschnitt
- 17: Maschinengestell
- 18: Verformungsabschnitt
- 20: Krafteinleitungsabschnitt
- 22: Außennut
- 23: Mantelfläche
- 24: Radialbohrung / Kammer
- 26: Mittelachse von 24
- 28: Boden von 24
- 30: Sensor / DMS
- 32: Sensorsystem
- 33: stegartige Abschnitte von 12
- 36: Verbindungskanal
- 34: Deckel
- 38: Stirnseite von 12
- 40: Anschlusskanal
- 42: Messanordnung
- 44: Anschlussglied
- 46: Auswertungseinheit
- 48: Drehsicherung

## Patentansprüche

1. Kraftmessachse (10) zum Einsatz in einer maritimen Umgebung mit einem Messkörper (12), der im Wesentlichen zylindrisch ausgebildet ist und der sich koaxial entlang einer Längsachse (14) erstreckt, wobei der Messkörper (12) entlang einer axialen Richtung nacheinander folgende Abschnitte (16, 18, 20) aufweist:
einen ersten Lagerabschnitt (16-1) zum Abstützen des Messkörpers (12) in oder an einem externen Maschinengestell (17);
einen ersten Verformungsabschnitt (18-1) mit einer ersten Außennut (22-1) zum Messen einer elastischen Verformung, die durch eine Kraft (F) verursacht wird, die von radial außen quer zur Längsachse (14) auf den Messkörper (12) wirkt;
einen Krafteinleitungsabschnitt (20) zum Einleiten der Kraft (F) in den Messkörper (12);
einen zweiten Verformungsabschnitt (18-2) mit einer zweiten Außennut (22-2); und
einen zweiten Lagerabschnitt (16-2) zum Abstützen des Messkörpers (12) in oder an dem externen Maschinengestell (17);
wobei jeder der Verformungsabschnitte (18) mindestens zwei umfänglich beabstandete Radialbohrungen (24) aufweist, an deren Böden (28) jeweils mindestens ein Sensor (30) zum Messen der elastischen Verformung angebracht ist,
wobei jede der Radialbohrungen (24) mit einem Deckel (34) dicht verschließbar ist, durch gekennzeichnet, dass jeweils eine der Radialbohrungen (24-1, 24-3) des ersten Verformungsabschnitts (18-1) mit einer der Radialbohrungen (24-2, 24-4) des zweiten Verformungsabschnitts (18-2) über einen Verbindungskanal (36), der sich innen durch den Messkörper (12) erstreckt, räumlich verbunden ist, um jeweils eine Messanordnung (42) zu definieren, wobei die Verbindungskanäle (36-1, 36-2) eine elektrische Verbindungsleitung zwischen den entsprechenden Sensoren (30-1, 30-2; 30-3, 30-4) aufnehmen, die jeweils ein Sensorsystem (32-1;32-2) definieren, und
wobei der Messkörper (12) mindestens zwei der Messanordnungen (42-1, 42-2) aufweist, wobei die mindestens zwei der Messanordnungen (42-1, 42-2) räumlich getrennt voneinander im Messkörper (12) vorgesehen sind und jeweils eines der Sensorsysteme (32-1, 32-2) aufnimmt, wobei die Sensorsysteme unabhängig voneinander arbeiten.

2. Kraftmessachse (10) nach Anspruch 1, wobei der zylindrische Messkörper (12) zwei sich axial gegenüber liegende Stirnflächen (38) aufweist und wobei jede der Messanordnungen (42) ferner einen separaten Anschlusskanal (40-1, 40-2) umfasst, der sich von einer der Radialbohrungen (24-2, 24-4) von jeder der Messanordnungen (42-1, 42-2), vorzugsweise axial, nach außen zu einer der Stirnflächen (38) des Messkörpers (12) erstreckt.

3. Kraftmessachse (10) nach Anspruch 2, wobei jeder der Anschlusskanäle (40) einen Hohlraum in einem axialen Endabschnitt des Messkörpers (12) ist, der eingerichtet ist, ein Anschlussglied (44) dicht aufzunehmen, wobei das Anschlussglied (44) eine Steckerkappe und vorzugsweise eine elektronische Auswertungseinheit (46) aufweist.

4. Kraftmessachse (10) nach Anspruch 3, die ferner die Anschlussglieder (44), mit denen die Anschlusskanäle (40) von axial außen dicht verschlossen werden, und die Deckel (34) umfasst, mit denen die Radialbohrungen (24) von radial außen dicht verschlossen sind.

5. Kraftmessachse (10) nach Anspruch 4, wobei die Radialbohrungen (24), der Verbindungskanal (36) und der Anschlusskanal (40) von jeder der Messanordnungen (42) zusammen mit den entsprechenden Deckeln (34) und dem Anschlussglied (44) jeweils einen dichten Hohlraum einschließen, der mit einem Gas gefüllt ist.

6. Kraftmessachse (10) nach einem der Ansprüche 1 bis 5, wobei die Sensoren (30) an den Böden (28) der Radialbohrungen (24) fixiert sind, wobei die Sensoren (30) von jeder der Messanordnungen (42) elektrisch über die Verbindungsleitung, die sich durch den entsprechenden Verbindungskanal (36) erstreckt, miteinander verbunden sind und über eine Anschlussleitung, die sich durch einen Anschlusskanal (40) erstreckt, an das jeweilige Anschlussglied (44) gekoppelt sind.

7. Kraftmessachse (10) nach einem der Ansprüche 1 bis 6, wobei sich jeweils zwei der umfänglich beabstandeten Radialbohrungen (24) von jedem der Verformungsabschnitte (18) radial direkt gegenüberliegen, um einen stegartigen Abschnitt dazwischen auszubilden.

## Claims

1. A force-measuring axle (10) for use in maritime environment including a measuring body (12), which is substantially formed cylindrically and extends coaxially along a longitudinal axis (14), wherein the measuring body (12) comprises, in an axial direction subsequently, the following portions (16, 18, 20):
a first supporting portion (16-1) for supporting the measuring body (12) in or on an external machine frame (17);
a first deforming portion (18-1) including a first outer groove (22-2); and
a second supporting portion (16-2) for supporting the measuring body (12) in or on the external machine frame (17);
wherein each of the deforming portions (18) comprises at least two radial drillings (24) spaced circumferentially, at bases (28) of which respectively one sensor (30) for measuring the elastic deformation is attached,
wherein each of the radial drillings (24) is sealable tightly by a cover (34),
**characterized in that**
respectively one of the radial drillings (24-1, 24-3) of the first deforming portion (18-1) is spatially connected to one of the radial drillings (24-2, 24-4) of the second deforming portion (18-2) via a joining channel (36) extending internally through the measuring body (12) in order to define respectively one measuring arrangement (42), wherein the joining channels (36-1, 36-2) house an electrical connection line between the corresponding sensors (30-1, 30-2; 30-3, 30-4), which respectively define one sensor system (32-1; 32-2), and
wherein the measuring body (12) comprises at least two of the measuring arrangements (42-1, 42-2), wherein the at least two of the measuring arrangements (42-1, 42-2) are provided spatially separate from each other in the measuring body (12) and respectively house one of the sensor systems (32-1, 32-2), wherein the sensor systems operate independently from each other.

2. The force-measuring axle (10) of claim 1, wherein the cylindrical measuring body (12) comprises two axially opposing end faces (38), and wherein each of the measuring arrangements (42) further includes a separate connection channel (40-1, 40-2) extending from one of the radial drillings (24-2, 24-4) of each of the measuring arrangements (42-1, 42-2), preferably axially, towards an outside of one of the end faces (38) of the measuring body (12).

3. The force-measuring axle (10) of claim 2, wherein each of the connection channels (40) is a cavity in an axial end portion of the measuring body (12), which is configured to house a connection member (44) tightly, wherein the connection member (44) comprises a connector cap, and preferably an electronic evaluation unit (46).

4. The force-measuring axle (10) of claim 3, further including the connection members (44) by which the connection channels (40) are axially sealed tightly from the outside, and the covers (34) by which the radial drillings (24) are tightly closed radially from the outside.

5. The force-measuring axle (10) of claim 4, wherein the radial drillings (24), the joining channel (36), and the connection channel (40) of each of the measuring arrangements (42) enclose together with the corresponding covers (34) and the connection member (44) respectively one tight cavity being filled with gas.

6. The force-measuring axle (10) of any of claims 1 to 5, wherein the sensors (30) are fixed to the bases (28) of the radial drillings (24), wherein the sensors (30) of each of the measuring arrangements (42) are electrically connected to each other via the connection lines, which extend through the corresponding joining channel (36), and are coupled to the respective connection member (44) via one connection line extending through a connection channel (40).

7. The force-measuring axle (10) of any of claims 1 to 6, wherein respectively two of the circumferentially spaced radial drillings (24) of each of the deforming portions (18) are directly opposed radially for forming a web-like portion therebetween.

## Revendications

1. Axe de mesure de force (10) destiné à être utilisé dans un environnement maritime, comprenant un corps de mesure (12) qui est réalisé sous forme essentiellement cylindrique et qui s'étend coaxialement le long d'un axe longitudinal (14), le corps de mesure (12) présentant, le long d'une direction axiale, les portions (16, 18, 20) successives suivantes :
une première portion de palier (16-1) pour le support du corps de mesure (12) dans ou sur un bâti de machine extérieur (17) ;
une première portion de déformation (18-1) avec une première rainure extérieure (22-1) pour la mesure d'une déformation élastique qui est causée par une force (F) qui agit radialement depuis l'extérieur transversalement à l'axe longitudinal (14) sur le corps de mesure (12) ;
une portion d'introduction de force (20) pour introduire la force (F) dans le corps de mesure (12) ;
une deuxième portion de déformation (18-2) comprenant une deuxième rainure extérieure (22-2) ; et
une deuxième portion de palier (16-2) pour le support du corps de mesure (12) dans ou sur le bâti de machine extérieur (17) ;
chacune des portions de déformation (18) présentant au moins deux alésages radiaux (24) espacés sur la périphérie, au niveau des fonds (28) desquels est à chaque fois monté au moins un capteur (30) pour mesurer la déformation élastique,
chacun des alésages radiaux (24) pouvant être fermé hermétiquement avec un couvercle (34),
**caractérisé en ce**
**qu'**à chaque fois l'un des alésages radiaux (24-1, 24-3) de la première portion de déformation (18-1) est connecté physiquement à l'un des alésages radiaux (24-2, 24-4) de la deuxième portion de déformation (18-2) par le biais d'un canal de liaison (36) qui s'étend à l'intérieur à travers le corps de mesure (12), afin de définir dans chaque cas un agencement de mesure (42), les canaux de liaison (36-1, 36-2) recevant une conduite de connexion électrique entre les capteurs correspondants (30-1, 30-2 ; 30-3, 30-4), lesquels définissent à chaque fois un système de capteur (32-1 ; 32-2), et
le corps de mesure (12) présentant au moins deux des agencements de mesure (42-1, 42-2), les au moins deux des agencements de mesure (42-1, 42-2) étant prévus sous forme séparée physiquement les uns des autres dans le corps de mesure (12) et recevant à chaque fois l'un des systèmes de capteur (32-1, 32-2), les systèmes de capteur fonctionnant indépendamment les uns des autres.

2. Axe de mesure de force (10) selon la revendication 1, dans lequel le corps de mesure cylindrique (12) présente deux surfaces frontales (38) opposées axialement et dans lequel chacun des agencements de mesure (42) comprend en outre un canal de raccordement séparé (40-1, 40-2) qui s'étend depuis l'un des alésages radiaux (24-2, 24-4) depuis chacun des agencements de mesure (42-1, 42-2), de préférence axialement vers l'extérieur vers l'une des surfaces frontales (38) du corps de mesure (12).

3. Axe de mesure de force (10) selon la revendication 2, dans lequel chacun des canaux de raccordement (40) est une cavité dans une portion d'extrémité axiale du corps de mesure (12) qui est prévue pour recevoir hermétiquement un organe de raccordement (44), l'organe de raccordement (44) présentant un capuchon de connecteur et de préférence une unité d'analyse électronique (46).

4. Axe de mesure de force (10) selon la revendication 3, qui comprend en outre les organes de raccordement (44) avec lesquels les canaux de raccordement (40) sont fermés hermétiquement et axialement depuis l'extérieur et les couvercles (34) avec lesquels les alésages radiaux (24) sont fermés hermétiquement et radialement depuis l'extérieur.

5. Axe de mesure de force (10) selon la revendication 4, dans lequel les alésages radiaux (24), le canal de liaison (36) et le canal de raccordement (40) de chacun des agencements de mesure (42) forment conjointement avec les couvercles correspondants (34) et l'organe de raccordement (44) à chaque fois une cavité hermétique qui est remplie de gaz.

6. Axe de mesure de force (10) selon l'une quelconque des revendications 1 à 5, dans lequel les capteurs (30) sont fixés au niveau des fonds (28) des alésages radiaux (24), les capteurs (30) de chacun des agencements de mesure (42) étant connectés les uns aux autres électriquement par le biais de la conduite de connexion qui s'étend à travers le canal de liaison correspondant (36), et étant accouplés à l'organe de raccordement respectif (44) par le biais d'une conduite de raccordement qui s'étend à travers un canal de raccordement (40).

7. Axe de mesure de force (10) selon l'une quelconque des revendications 1 à 6, dans lequel à chaque fois deux des alésages radiaux (24) espacés sur la périphérie sont directement opposés radialement à chacune des portions de déformation (18) afin de constituer entre eux une portion de type nervure.
